# EUROPÄISCHE PATENTANMELDUNG

(11) **EP 2 103 206 A1**
(43) Veröffentlichungstag der Anmeldung: **23.09.2009**
(21) Anmeldenummer: 09003052.9
(22) Anmeldetag: 03.03.2009
(51) Int. Cl.: A01J 25/15

(54) **Pressenanordnung sowie Verfahren zum Pressen von Käse in Blockformen**

(30) Priorität: 19.03.2008 DE 102008014977
(71) Anmelder: ALPMA Alpenland Maschinenbau GmbH, 83543 Rott am Inn (DE)
(72) Erfinder: Eitermoser, Franz, 83539 Pfaffing (DE); Dürmeier, Siegfried, 84556 Kastl (DE); Seemüller, Alois, 83539 Pfaffing (DE)
(74) Vertreter: Manitz, Finsterwald & Partner GbR

(57) **Zusammenfassung**

Die vorliegende Erfindung betrifft eine Pressenanordnung zum Pressen von Käse in Blockformen. Die Pressenanordnung weist eine ebene Tragstruktur auf, in der eine Vielzahl von Presstöpfen entlang ihrer Längsachse zwischen einer oberen Verschiebungsposition und einer unteren Verschiebungsposition verschiebbar gelagert sind. Ferner umfasst die Pressenanordnung eine weitere ebene Tragstruktur, in der eine Vielzahl von in die Presstöpfe einführbare Pressstempel entlang ihrer Längsachse zwischen einer oberen Verschiebungsposition und einer unteren Verschiebungsposition verschiebbar gelagert sind.

## Beschreibung

Die vorliegende Erfindung betrifft eine Pressenanordnung zum Pressen von Käse in Blockformen sowie ein Verfahren zum Pressen von Käse in Blockformen unter Verwendung solch einer Pressenanordnung, welche eine Vielzahl von Presstöpfen zur Aufnahme von Käsemasse wie beispielsweise Käsebruch umfasst, in die jeweils ein Pressstempel einführbar ist, um damit zum einen die in der Käsemasse noch vorhandene Molke auszupressen und zum anderen der Käsemasse die gewünschte Endform zu verleihen, welche durch die Presstöpfe sowie die Pressstempel vorgegeben ist.

Die Käseherstellung unter Verwendung solch einer bekannten Pressenanordnung erweist sich in wirtschaftlicher Hinsicht dahingehend als nachteilhaft, dass die Presstöpfe einzeln von einer Füllstation zur Befüllung mit Käsemasse zu einer Pressstation transportiert werden müssen. Darüber hinaus erweist sich die Herstellung von Käse unter Verwendung solch einer bekannten Pressenanordnung auch in technischer Hinsicht als problematisch, da die Pressstempel üblicherweise starr miteinander gekoppelt sind, so dass die Vorschubbewegung der einzelnen Pressstempel nicht individuell gesteuert werden kann. Da jedoch die Käsemasse in den einzelnen Presstöpfen beispielsweise aufgrund von vorhandenen Lufteinschlüssen und/oder voneinander geringfügig abweichenden Viskositäten unterschiedlich stark komprimierbar sein kann und auch die Füllhöhen in den einzelnen Presstöpfen voneinander abweichen können, wäre es wünschenswert, die Vorschubbewegung bzw. den Pressdruck der einzelnen Pressstempel individuell steuern zu können.

Der vorliegenden Erfindung liegt daher die Aufgabe zugrunde, eine Realisierung anzugeben, welche es ermöglicht, die Käseherstellung und insbesondere den Pressvorgang sowohl in wirtschaftlicher als auch in technischer Hinsicht zu verbessern.

Diese Aufgabe wird mit einer Pressenanordnung zum Pressen von Käse in Blockformen gelöst, welche die Merkmale des Anspruchs 1 aufweist. Insbesondere wird die Aufgabe dadurch gelöst, dass die Pressenanordnung zumindest eine ebene Tragstruktur, wie beispielsweise einen Trägerrost oder eine Platte, in der eine Vielzahl von Presstöpfen entlang ihrer Längsachse zwischen einer oberen Verschiebungsposition und einer unteren Verschiebungsposition verschiebbar gelagert sind, und zumindest eine weitere ebene Tragstruktur wie beispielsweise einen Trägerrost oder eine Platte umfasst, in der eine Vielzahl von in die Presstöpfe einführbare Pressstempel entlang ihrer Längsachse zwischen einer oberen Verschiebungsposition und einer unteren Verschiebungsposition verschiebbar gelagert sind.

Bevor im Folgenden genauer auf die erfindungsgemäße Pressenanordnung eingegangen wird, sei der Vollständigkeit halber an dieser Stelle erwähnt, dass sich Richtungs- oder Positionsangaben wie beispielsweise "unten" oder "oben" im Rahmen der vorliegenden Erfindung auf die Gebrauchsposition sowohl der Presstopftragstruktur als auch der Pressstempeltragstruktur beziehen, in der die Presstopftragstruktur im Wesentlichen horizontal ausgerichtet ist, so dass deren Presstöpfe von oben mit Käsemasse befüllt werden können.

Dadurch, dass die einzelnen Presstöpfe von einer Tragstruktur getragen werden und somit über diese mittelbar miteinander in Verbindung stehen, sind die einzelnen Presstöpfe gemeinsam handhabbar, so dass es nicht erforderlich ist, jeden Presstopf einzeln von einer Füllstation zur Befüllung mit Käsemasse zu einer Pressstation zu transportieren. Vielmehr können die Presstöpfe nach ihrer Befüllung mit Käsemasse mit Hilfe der Tragstruktur gemeinsam von einer Füllstation zu einer Pressstation transportiert werden, wodurch eine Reduzierung des Transportaufwands erzielt werden kann.

Die verschiebliche Lagerung sowohl der Presstöpfe als auch der Pressstempel in einer jeweils zugehörigen Tragstruktur erweist sich dahingehend als vorteilhaft, dass dadurch ein individueller Vorschub der einzelnen Pressstempel und damit eine individuelle Druckbeaufschlagung der von den Presstöpfen definierten Druckräume sichergestellt werden kann. Allerdings wird im Falle, dass nur eine Presstopftragstruktur zum Einsatz kommen sollte, deren Presstöpfe von den Pressstempeln einer darüber angeordneten Pressstempeltragstruktur mit Druck beaufschlagt werden, die verschiebliche Lagerung der Presstöpfe in der Presstopftragstruktur nicht genutzt. Vielmehr wird die verschiebliche Lagerung der Presstöpfe in der Presstopftragstruktur erst dann genutzt, wenn über die erste Pressstempeltragstruktur eine zweite Presstopftragstruktur und darauf eine zweite Pressstempeltragstruktur aufgebracht wird. In diesem Fall dienen dann nämlich die Presstöpfe der zweiten Presstopftragstruktur gewissermaßen selbst als Pressstempel, welche den auf die Pressstempel der zweiten Pressstempeltragstruktur aufgebrachten Druck auf die Pressstempel der ersten Pressstempeltragstruktur abgeben. Hierzu ist es dann erforderlich, dass auch die Presstöpfe verschiebbar in der jeweiligen Tragstruktur gelagert sind.

Wie bereits den vorstehenden Ausführungen entnommen werden kann, ermöglicht es die erfindungsgemäße Pressenanordnung, eine Mehrzahl von parallelen Stapeln aus abwechselnd aufeinander gestapelten Presstopftragstrukturen und Pressstempeltragstrukturen derart zu bilden, dass in vertikaler Richtung betrachtet pro Stapel jeweils eine Vielzahl von abwechselnd übereinander gestapelten Presstöpfen und Pressstempeln entsteht. Da jedoch jeder der Presstöpfe als auch jeder der Pressstempel verschiebbar an bzw. in der jeweils zugehörigen Tragstruktur gelagert ist, ist es somit möglich, jede der so gebildeten Presstopf-Pressstempel-Säule über den jeweils obersten Pressstempel einzeln individuell mit Druck zu beaufschlagen, wodurch die Vorschubbewegung der einzelnen Pressstempel und Presstöpfe jeder Säule individuell, also unabhängig von den anderen Säulen, gesteuert werden kann. Dennoch kann der Pressvorgang an allen Säulen gleichzeitig durchgeführt werden, was zu einer vorteilhaften Durchsatzerhöhung führt.

Darüber hinaus kann mit der erfindungsgemäßen Pressenanordnung sichergestellt werden, dass jeder Presstopf bzw. die von den einzelnen Presstöpfen aufgenommene Käsemasse einer Presstopf-Pressstempel-Säule mit ein und demselben Druck beaufschlagt wird, da sich infolge der verschiebbaren Lagerung sowohl der Pressstempel als auch der Presstöpfe in den jeweils zugehörigen Tragstrukturen die auf den obersten Pressstempel aufgebrachten Presskräfte gleichmäßig über die jeweilige Presstopf-Pressstempel-Säule nach unten fortpflanzen.

Die Presstöpfe und Pressstempel mit Hilfe jeweils einer Tragstruktur in Gruppen zu organisieren, erweist sich ferner dahingehend als vorteilhaft, dass durch die Presstopf- und Pressstempeltragstrukturen die freie Knicklänge der zuvor beschriebenen Presstopf-Pressstempel-Säulen reduziert werden kann, was im Umkehrschluss einer Erhöhung der maximal zulässigen Presskräfte bedeutet. Die verschiebbare Lagerung sowohl der Presstöpfe als auch der Pressstempel an den jeweiligen Tragstrukturen ermöglicht somit eine Erhöhung der Pressleistung, da infolge der größeren zulässigen Presskräfte die Presszeit reduziert werden kann, welche erforderlich ist, um überschüssige Molke aus der Käsemasse herauszupressen.

Zwar werden im Rahmen der vorliegenden Erfindung die Pressformen, welche zur Aufnahme der Käserohmasse dienen, als Presstöpfe bezeichnet, jedoch bedeutet dies nicht zwangsweise, dass die Presstöpfe eine zylindrische Gestalt aufweisen müssen. Vielmehr können die Presstöpfe im Grundriss betrachtet beliebig berandet sein. Beispielsweise können die Presstöpfe im Grundriss betrachtet eine dreieckige, rechteckige, ovale oder eine sternförmige Gestalt mit abgerundeten Spitzen aufweisen.

Vorteilhafte Ausführungsformen der Erfindung ergeben sich aus den abhängigen Ansprüchen, der Beschreibung sowie den Zeichnungen.

So ist es gemäß einer bevorzugten Ausführungsform vorgesehen, dass die Anzahl der Presstöpfe der Presstopftragstruktur mit der Anzahl der Pressstempel der Pressstempeltragstruktur übereinstimmt, und dass die Presstöpfe und die Pressstempel in jeweils demselben Raster verteilt über die jeweilige Tragstruktur angeordnet sind. Dies ermöglicht es, dass in einer ersten Konfiguration, in der die Pressstempeltragstruktur über der Presstopftragstruktur angeordnet ist, ein von den Presstöpfen definierter Druckraum durch die in die Presstöpfe einführbaren Pressstempel verringerbar ist. In einer zweiten Konfiguration hingegen, in der in umgekehrter Reihenfolge die Presstopftragstruktur über der Pressstempeltragstruktur angeordnet ist, die Pressstempel von den darüber befindlichen Presstöpfen mit Druck beaufschlagt werden können, so dass letztlich die Oberseiten der Pressstempel Standflächen für darüber angeordnete Presstöpfe bilden.

In der Praxis treten somit beide Konfigurationen gleichzeitig in vertikaler Richtung abwechselnd auf, indem in einer untersten Ebene eine erste Presstopftragstruktur, darüber eine erste Pressstempeltragstruktur, darauf wiederum eine auf der ersten Pressstempeltragstruktur abgestützte zweite Presstopftragstruktur, darüber eine zweite Pressstempeltragstruktur, etc. angeordnet werden.

Dadurch, dass die Anzahl der Presstöpfe und der Pressstempel übereinstimmt und die Presstöpfe und die Pressstempel in demselben Raster verteilt über die jeweilige Tragstruktur angeordnet sind, kann somit erreicht werden, dass zu jedem Presstopf einer Presstopftragstruktur ein Pressstempel einer Pressstempeltragstruktur existiert, welche sich in der voran beschriebenen Art und Weise zu einer Presstopf-Pressstempel-Säule über-und ineinander stapeln lassen.

Um in der gewünschten Weise die Verschiebbarkeit der Presstöpfe in Bezug auf die Presstopftragstruktur sicherstellen zu können, kann die Presstopftragstruktur eine Vielzahl von Durchgangsöffnungen aufweisen, in denen die einzelnen Presstöpfe angeordnet sind. Damit jedoch die Presstöpfe aus den Durchgangsöffnungen der Presstopftragstruktur nicht nach unten herausfallen oder nach oben herausgedrückt werden können, weist jeder Presstopf zwei in Längsrichtung beabstandete Anschläge auf, welche derart angeordnet sind, dass in Zusammenwirken mit der zugehörigen Durchgangsöffnung die Verschiebbarkeit des jeweiligen Presstopfs begrenzt wird. Die in Längsrichtung beabstandeten Anschläge definieren somit die untere und die obere Maximalverschiebungsposition der Presstöpfe.

Gemäß einer möglichen Ausführungsform ist es vorgesehen, dass ein unterer Anschlag des Presstopfs durch einen den Presstopf umfangsseitig umgebenden unteren Flansch gebildet wird, wohingegen ein oberer Anschlag des Presstopfs durch einen den Presstopf umfangsseitig umgebenden Kragen gebildet wird. Hierbei ist es vorzugsweise vorgesehen, dass der untere Flansch am Boden des Presstopfs und der Kragen oberhalb des unteren Flansches entlang der Umfangswand des Presstopfs vorgesehen ist.

Da es sich bei dem Boden des Presstopfs um ein mit der Umfangswand desselben verbundenes separates Bauteil handeln kann, ist es dabei gemäß einer besonders bevorzugten Ausführungsform vorgesehen, dass der untere Flansch durch den Boden selbst bzw. durch zumindest einen Randabschnitt desselben gebildet wird, welcher über die Umfangswand des Presstopfs radial übersteht.

Zwar wäre es möglich, den als oberen Anschlag dienenden Kragen als einen radial auskragenden Flansch entlang des die Einfüllöffnung des Presstopfs definierenden Randes auszubilden. In diesem Falle würden sich jedoch die Presstöpfe in ihrer unteren Verschiebeposition mit annähernd ihrer gesamten Höhe unterhalb der jeweiligen Tragstruktur erstrecken, was aus Gründen der Handhabbarkeit unerwünscht sein kann.
Gemäß einer bevorzugten Ausführungsform ist es daher vorgesehen, zusätzlich zu einem die Einfüllöffnung des jeweiligen Presstopfs umgebenden, als Abstützfläche für darüber anzuordnende Pressstempeltragstrukturen dienenden Flansch den als oberen Anschlag dienenden Kragen entlang der Umfangswand des Presstopfs vorzugsweise etwa auf halber Höhe desselben vorzusehen, so dass dieser in seiner unteren Verschiebeposition sich etwa zur Hälfte unterhalb der Tragstruktur und mit der anderen Hälfte oberhalb der Tragstruktur erstreckt. Hierdurch können die Hubwege klein gehalten werden, welche erforderlich sind, um eine Presstopftragstruktur auf eine zugehörige Pressstempeltragstruktur zu stapeln, was insgesamt eine Rationalisierung der Bewegungsabläufe bei der Käseherstellung mit sich bringt.

Um in der gewünschten Weise die Verschiebbarkeit der Pressstempel zu gewährleisten, kann die Pressstempeltragstruktur ähnlich wie die Presstopftragstruktur eine Vielzahl von Durchgangsöffnungen aufweisen, in denen die einzelnen Pressstempel verschiebbar geführt sind. Damit jedoch die Pressstempel aus der Pressstempeltragstruktur weder nach unten herausfallen noch nach oben herausgedrückt werden können, kann jeder Pressstempel zwei in Längsrichtung beabstandete Anschläge aufweisen, welche derart angeordnet sind, dass in Zusammenwirken mit der jeweils zugehörigen Durchgangsöffnung die Verschiebbarkeit des jeweiligen Pressstempels begrenzt ist.

Der obere Anschlag des Pressstempels kann dabei beispielsweise durch eine obere Druckplatte des Pressstempels gebildet werden, wohingegen der untere Anschlag des Pressstempels durch eine untere Druckplatte des Pressstempels gebildet werden kann, welche von der oberen Druckplatte durch zumindest ein Abstandselement beabstandet ist.

Gemäß einer besonders bevorzugten Ausführungsform ist es dabei vorgesehen, dass das Abstandselement jedes Pressstempels durch zumindest zwei parallel zueinander verlaufende Stege gebildet wird, welche in zwei separaten Schlitzen, welche zusammen jeweils eine Durchgangsöffnung definieren, in der Pressstempeltragstruktur geführt sind. Das Abstandselement in Form zweier parallel zueinander verlaufender Stege auszubilden, welche in entsprechenden, jeweils eine Durchgangsöffnung definierenden Schlitzen in der Pressstempeltragstruktur geführt sind, erweist sich dabei dahingehend als vorteilhaft, dass dadurch eine Verkantung des Pressstempels in der Pressstempeltragstruktur weitestgehend ausgeschlossen werden kann.

Die Anschlagfunktion der Druckplatten kann dadurch realisiert werden, dass die einem jeden Pressstempel zugeordnete Durchgangsöffnung eine kleinere Querschnittsfläche als jede der Druckplatten aufweist. Beispielsweise können die Druckplatten so bemessen sein, dass sie im Grundriss betrachtet über das Abstandselement nach außen überstehen.

Gemäß einer weiteren Ausführungsform wäre es ebenfalls möglich, die Anschlagfunktion der Druckplatten dadurch zu realisieren, dass diese den Abstand zwischen den als Abstandselement dienenden parallel zueinander verlaufenden Stegen überbrücken. In der oberen bzw. unteren Verschiebungsposition des Pressstempels gelangt dabei die jeweilige Druckplatte in Anlage mit der Tragstruktur zwischen den darin ausgebildeten Schlitzen zur Führung der als Abstandselement dienenden parallel zueinander verlaufenden Stege, so dass auf diese Weise sehr wirkungsvoll ein Herausfallen bzw. Herausdrücken der Pressstempel aus der Pressstempeltragstruktur verhindert werden kann.

Gemäß einer weiteren Ausführungsform kann es sich bei der Presstopftragstruktur und/oder der Pressstempeltragstruktur um einen Trägerrost oder eine Platte handeln. Im Falle eines Trägerrosts können dabei die jeweiligen Durchgangsöffnungen zur Aufnahme der Presstöpfe bzw. Pressstempel durch die einzelnen den Trägerrost bildenden Träger begrenzt werden, welche beispielsweise senkrecht zueinander verlaufen und parallel beabstandet zueinander angeordnet sein können, wodurch ein regelmäßiger Trägerrost mit einer Vielzahl rechteckiger, vorzugsweise quadratischer Durchgangsöffnungen gebildet wird. Um der Presstopftragstruktur und der Pressstempeltragstruktur die erforderliche Steifigkeit zu verleihen, können außerdem an deren Unterseiten Stützstege ausgebildet sein, welche sich vorzugsweise entlang der äußeren Berandung des/der die jeweilige Tragstruktur bildenden Trägerrosts/Platte erstrecken können.

Die Höhe dieser Stützstege und die Position des oberen Anschlags der Presstöpfe können gemäß einer weiteren Ausführungsform derart aufeinander abgestimmt sein, dass in der untersten Verschiebungsposition der Presstöpfe deren Unterkante mit der Unterkante der Stützstege bündig ist. Durch die Abstimmung der Höhe der Stützstege und der Position des oberen Anschlags aufeinander kann sichergestellt werden, dass beim Anheben der Presstopftragstruktur auch gleichzeitig die Presstöpfe mit angehoben werden, was wiederum eine Reduzierung der erforderlichen Hubwege und damit eine Rationalisierung der Bewegungsabläufe während der Käseherstellung bedeutet.

Um sicherzustellen, dass beim abwechselnden Aufeinanderstapeln von Presstopf- und Pressstempeltragstrukturen in der gewünschten Weise einander zugeordnete Pressstempel und Presstöpfe vertikal über- und ineinander zu liegen kommen, um in der bereits voran beschriebenen Art und Weise eine Vielzahl von Presstopf-Pressstempel-Säulen zu bilden, können zumindest an der Oberseite des Trägerrosts bzw. der Platte der Pressstempeltragstruktur mehrere Vorsprünge vorgesehen sein, welche derart angeordnet sind, dass sie beim Aufeinanderstapeln einer Presstopftragstruktur auf eine Pressstempeltragstruktur mit den Stützstegen des/der darüber gestapelten Trägerrosts/Platte gleitend in Anlage gelangen. Die an der Oberseite zumindest der Pressstempeltragstruktur vorgesehenen Vorsprünge dienen somit als Führung und Positionierungshilfe beim Aufeinanderstapeln von Pressstempel- und Presstopftragstrukturen.

Da die in Rede stehenden Vorsprünge mit den darüber befindlichen Stützstegen gleitend in Anlage gelangen, wird über die Vorsprünge darüber hinaus eine seitliche Aussteifung der aufeinander gestapelten Pressstempel- und Presstopftragstrukturen bzw. der einzelnen Presstopf-Pressstempel-Säulen erzielt, wodurch eine weitere Erhöhung der zulässigen Presskräfte möglich ist.

Gemäß einer weiteren Ausführungsform umfasst die erfindungsgemäße Pressenanordnung ferner einen Pressrahmen zur Aufnahme einer Vielzahl abwechselnd aufeinander gestapelter Pressstempel- und Presstopftragstrukturen, welcher eine obere Riegelstruktur und eine mit der oberen Riegelstruktur starr verbundene untere Riegelstruktur aufweist. Hierbei sind an der oberen Riegelstruktur mehrere Presseinheiten wie beispielsweise Pressspindeln oder Kolbenzylindereinheiten vorgesehen, welche in demselben Raster wie sowohl die Presstöpfe als auch die Pressstempel angeordnet sind, so dass die Pressstempel und die Presstöpfe eines von der unteren Riegelstruktur getragenen Stapels aus Pressstempel- und Presstopftragstrukturen über die Presseinheiten mit Druck beaufschlagt werden können. Durch die starre Verbindung der oberen Riegelstruktur mit der unteren Riegelstruktur kann dabei erreicht werden, dass die auf den von der unteren Riegelstruktur getragenen Stapel aus Pressstempel-und Presstopftragstrukturen von den Presseinheiten aufgebrachten Kräfte als Reaktionskräfte in die unteren Riegelstruktur und von dort in den genannten Tragstrukturstapel eingeleitet werden, so dass keine resultierenden Kräfte abgetragen werden müssen. Mit anderen Worten ist die Pressenanordnung kraftneutral und kann somit an jedem beliebigen Ort zum Einsatz kommen.

Gemäß einem weiteren Aspekt der vorliegenden Erfindung wird die eingangs genannte Aufgabe mit einem Verfahren gelöst, welches die Merkmale des Anspruchs 16 aufweist. Das Verfahren wird unter Verwendung der erfindungsgemäßen Pressenanordnung durchgeführt, wobei auf eine erste Presstopftragstruktur, deren Presstöpfe zuvor mit Käserohmasse gefüllt wurden, eine erste Pressstempeltragstruktur derart aufgebracht wird, dass deren Pressstempel in die darunter befindlichen Presstöpfe eindringen, bis sie auf der darin befindlichen Käserohmasse aufstehen und folglich in Bezug auf die Pressstempeltragstruktur in Richtung ihrer oberen Verschiebungsposition gedrückt werden, bevor vorzugsweise unter Verwendung der Presseinheiten des Pressrahmens die Pressstempel in Richtung ihrer unteren Verschiebungsposition gedrückt werden.

Gemäß einer bevorzugten Ausführungsform wird bei dem Verfahren jedoch nicht nur eine einzige Pressstempeltragstruktur auf eine Presstopftragstruktur aufgebracht. Vielmehr ist es erfindungsgemäß vorgesehen, dass zwei, drei oder noch mehr Presstopf- und Pressstempeltragstrukturen abwechselnd übereinander gestapelt werden. So ist es bei einer bevorzugten Ausführungsform des erfindungsgemäßen Verfahrens vorgesehen, vor der Druckbeaufschlagung der ersten Pressstempeltragstruktur eine zweite Presstopftragstruktur, deren Presstöpfe mit Käsemasse gefüllt wurden, und darauf eine zweite Pressstempeltragstruktur derart aufzubringen, dass die Töpfe der zweiten Presstopftragstruktur auf den Pressstempeln der ersten Pressstempeltragstruktur aufstehen und die Pressstempel der zweiten Pressstempeltragstruktur in die Presstöpfe der zweiten Presstopftragstruktur eindringen, bis sie auf der darin befindlichen Käsemasse aufstehen, wodurch die Presstöpfe der zweiten Presstopftragstruktur als auch die Pressstempel der zweiten Pressstempeltragstruktur in Richtung ihrer oberen Verschiebungsposition gedrückt werden.

In dieser Ausgangsposition, in der sich die Pressstempel der ersten und zweiten Pressstempeltragstruktur als auch die Presstöpfe der zweiten Presstopftragstruktur im Bereich ihrer oberen Verschiebungsposition befinden, sind die zugehörigen Tragstrukturen frei von Presskräften und können insbesondere vertikal unabhängig von den Presstöpfen und Pressstempeln auf und ab verschoben werden. In horizontaler Richtung steifen jedoch die Pressstempel- und Presstopftragstrukturen die einzelnen Presstopf-Pressstempel-Säulen aus, so dass große Presskräfte auf die einzelnen Presstopf-Pressstempel-Säulen aufgebracht werden können. Dies kann bei dem erfindungsgemäßen Verfahren vorzugsweise unter Verwendung der Presseinheiten des Pressrahmens erfolgen, mit denen die Pressstempel der zweiten Pressstempeltragstruktur und über diese die Presstöpfe der zweiten Presstopftragstruktur sowie die Pressstempel der ersten Pressstempeltragstruktur in Richtung ihrer unteren Verschiebungsposition gedrückt werden. Hierdurch kann in der gewünschten Weise eine individuelle Druckbeaufschlagung der einzelnen Presstopf-Pressstempel-Säulen erzielt werden, wobei die Presstöpfe innerhalb einer Presstopf-Pressstempel-Säule bzw. die von den Presstöpfen aufgenommene Käsemasse mit jeweils derselben Druckkraft beaufschlagt werden bzw. wird.

Im Folgenden wird nun die Erfindung rein exemplarisch anhand einer beispielhaften Ausführungsform unter Bezugnahme auf die beigefügten Zeichnungen beschrieben, wobei:
- Fig. 1: eine vertikale Schnittdarstellung durch eine erfindungsgemäße Pressenanordnung bei Pressbeginn zeigt; und
- Fig. 2: die Pressenanordnung der Fig. 1 bei Pressende zeigt.

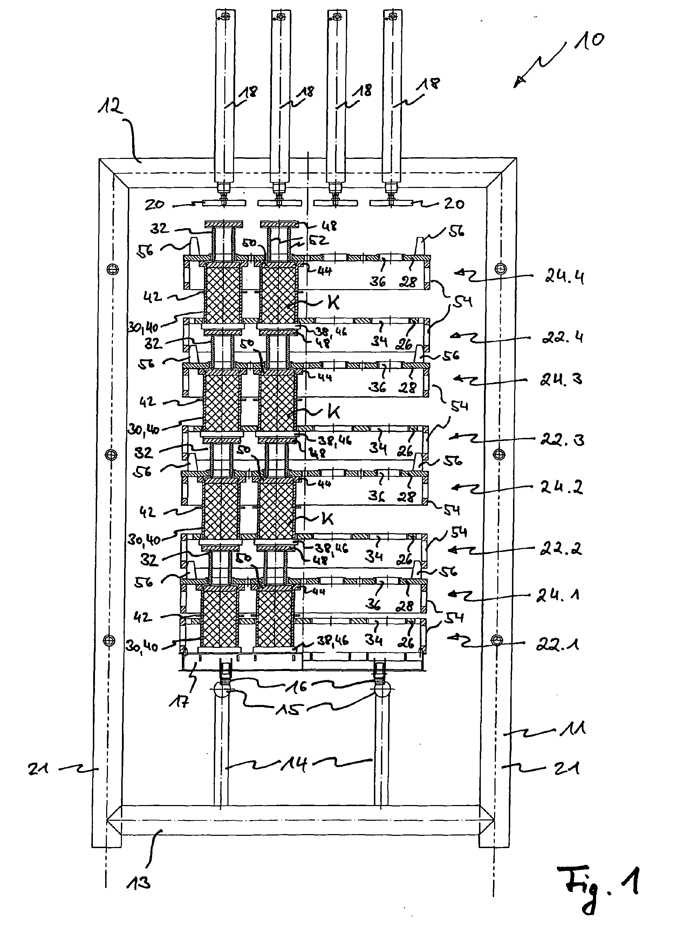

Die Fig. 1 zeigt eine erfindungsgemäße Pressenanordnung 10 bei Pressbeginn. Die Pressenanordnung 10 umfasst einen Pressrahmen 11 und weist eine obere Riegelstruktur 12 und eine untere Riegelstruktur 13 auf, wobei sich die obere Riegelstruktur 12 und die untere Riegelstruktur 13 horizontal zwischen zwei zueinander beabstandeten Reihen aus Stützen 21 erstrecken, welche senkrecht zur Zeichenebene hintereinander angeordnet sind. Durch die obere Riegelstruktur 12, die untere Riegelstruktur 13 sowie die Stützen 21 wird somit ein Rahmenfeld definiert, welches zur Aufnahme mehrerer abwechselnd aufeinander gestapelter Pressformtragstrukturen 22.1, 22.2, 22.3, 22.4 und Pressstempeltragstrukturen 24.1, 24.2, 24.3, 24.4 dient. An der oberen Riegelstruktur 12 sind acht Presseinheiten 18 in Form von Kolbenzylindereinheiten in einem regelmäßigen 4 x 2 Raster angeordnet, wobei aufgrund der Schnittdarstellung jedoch nur vier Presseinheiten 18 zu sehen sind.

Auf der unteren Riegelstruktur 13 sind zwei senkrecht zur Zeichenebene verlaufende Trägerschienen 15 über mehrere hintereinander angeordnete Stützfüße 14 abgestützt, auf denen ein mit Rollen 16 ausgestatteter fahrbarer Presstisch 17 in den Pressrahmen 11 ein- und ausgefahren werden kann. Der Presstisch 17 dient dabei zur Aufnahme von abwechselnd übereinander gestapelten Presstopftragstrukturen 22.1, 22.2, 22.3, 22.4 und Pressstempeltragstrukturen 24.1, 24.2, 24.3, 24.4. Zum Beladen des Presstischs 17 wird dieser aus dem Pressrahmen 11 auf den Trägerschienen 15 herausgefahren, so dass er für den Beladevorgang mit den Presstopf- und Pressstempeltragstrukturen 22.1, 22.2, 22.3, 22.4, 24.1, 24.2, 24.3, 24.4 leichter zugänglich ist.

Bevor im Folgenden auf den Pressvorgang unter Verwendung der erfindungsgemäßen Pressenanordnung 10 und insbesondere der Presseinheiten 18 genauer eingegangen wird, wird zunächst der Aufbau sowohl der Presstopftragstrukturen 22.1, 22.2, 22.3, 22.4 sowie der Pressstempeltragstrukturen 24.1, 24.2, 24.3, 24.4 genauer erläutert.

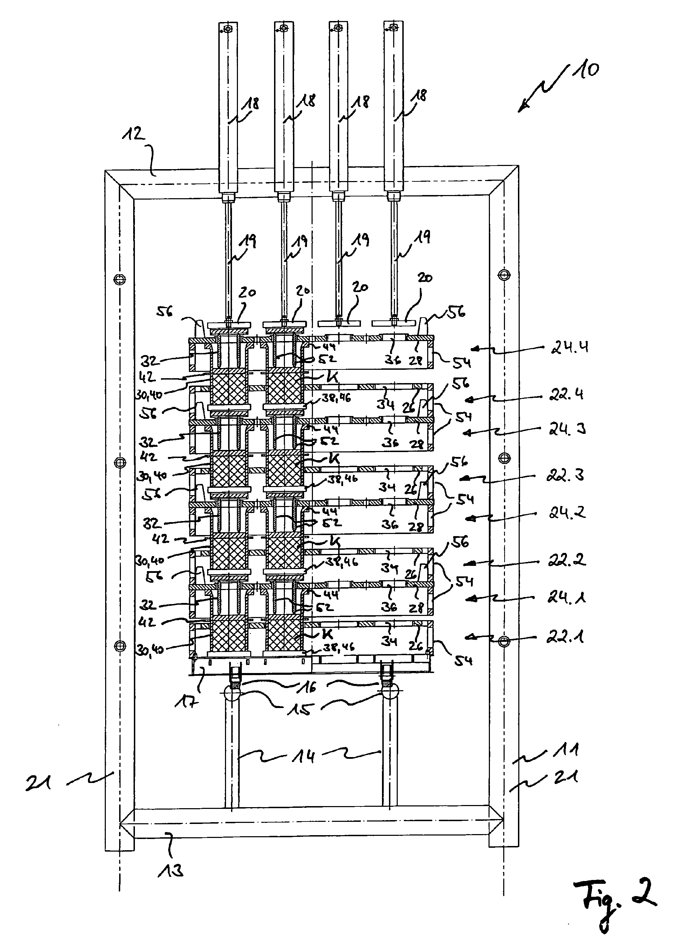

Die jeweils identisch aufgebauten Presstopftragstrukturen 22.1, 22.2, 22.3, 22.4 umfassen jeweils eine Platte 26, in der in einem regelmäßigen 4 x 2 Raster acht Durchgangsöffnungen 34 ausgebildet sind, von denen aufgrund der Schnittdarstellung in den Fig. 1 und 2 jedoch nur jeweils vier Durchgangsöffnungen 34 erkennbar sind. Die Durchgangsöffnungen 34 sind jeweils von kreisförmiger Gestalt und dienen dazu, jeweils einen kreisrunden Presstopf 30 aufzunehmen, wobei zur besseren Übersicht in den Figuren jedoch nur zwei Presstöpfe 30 dargestellt sind. Alternativ können jedoch die Durchgangsöffnungen 34 und/oder die Presstöpfe 30 auch eine andere Gestalt aufweisen. Beispielsweise können sowohl die Durchgangsöffnungen 34 als auch die Presstöpfe 30 eine rechteckige Form aufweisen. Ebenfalls wäre es möglich, dass nur die Durchgangsöffnungen 34 rechteckig ausgebildet sind, wohingegen die Presstöpfe 30 von kreisförmiger Gestalt sind und in den rechteckigen, vorzugsweise quadratischen Durchgangsöffnungen 34 verschiebbar gelagert sind.

Die Presstöpfe 30 weisen jeweils eine zylindrische Umfangswand 40 auf, und sind an ihrer Unterseite durch einen kreisrunden Topfboden 38 verschlossen, welcher einen größeren Durchmesser als die Umfangswand 40 aufweist, wodurch jeder der Töpfe 30 einen den Presstopf umfangsseitig umgebenden unteren Flansch 46 besitzt. Ferner weisen die Presstöpfe 30 entlang ihrer Einfüllöffnung jeweils einen radial auskragenden oberen Flansch 44 auf. Darüber hinaus ist die Umfangswand 40 jedes Topfs 30 etwa auf halber Höhe zwischen dem unteren Flansch 46 und dem oberen Flansch 44 von einem Kragen 42 umgeben. Die radiale Ausdehnung sowohl des Kragens 42 als auch des unteren Flansches 46 bzw. des den unteren Flansch 46 bildenden Topfbodens 38 ist dabei größer als der Durchmesser der Durchgangsöffnungen 34, so dass die Presstöpfe 30 zwischen einer oberen Verschiebungsposition, in der die unteren Flansche 46 an der Platte 26 anliegen und einer unteren Verschiebungsposition, in der die Krägen 42 an der Platte 26 anliegen, verschiebbar in den Durchgangsöffnungen 34 gelagert sind.

Auch die Pressstempeltragstrukturen 24.1, 24.2, 24.3, 24.4 weisen jeweils eine Platte 28 auf, in der acht in einem regelmäßigen 4 x 2 Raster angeordnete Durchgangsöffnungen 36 ausgebildet sind. In den Durchgangsöffnungen 36 ist jeweils ein Pressstempel 32 in vertikaler Richtung verschiebbar gelagert. Die Pressstempel 32 weisen dabei jeweils eine obere Druckplatte 48 und eine untere Druckplatte 50 auf, welche durch zwei vertikal ausgerichtete und parallel zueinander verlaufende Stege 52 auf Abstand gehalten werden. Die Stege 52 sind dabei durch die seitlichen Berandungen der Durchgangsöffnungen 36 geführt. Alternativ zu der dargestellten Ausführungsform könnte jeder der Stege 52 auch in einem eigenen Schlitz geführt sein, wobei die beiden einem Pressstempel 32 zugeordneten Schlitze eine Durchgangsöffnung 36 bilden. Als weitere Alternative wäre es ferner möglich, die obere Druckplatte 48 und die untere Druckplatte 50 durch beispielsweise ein rohrförmiges Stegelement auf Abstand zu halten, welches in einer einzigen kreisrunden Durchgangsöffnung 36 geführt ist, wobei der Durchmesser des rohrförmigen Stegelements geringer ist als der Durchmesser der Druckplatten 48, 50.

In der dargestellten Ausführungsform wird durch die seitlich über die Stege 52 auskragenden Abschnitte der Druckplatten 48, 50 jeweils ein Anschlag gebildet, welcher verhindert, dass die Pressstempel 32 aus den Durchgangsöffnungen 36 herausfallen oder herausgedrückt werden können. Die Pressstempel 32 sind somit in den Durchgangsöffnungen 36 zwischen einer oberen Verschiebungsposition, in der die untere Druckplatte 50 mit der Platte 28 in Anlage steht, und einer unteren Verschiebungsposition, in der die obere Druckplatte 48 mit der Platte 28 in Anlage steht, verschiebbar in den Durchgangsöffnungen 36 gelagert. Der durch die Höhe der Stege 52 definierte Pressweg der Pressstempel 32 ist dabei etwa so groß gewählt, dass durch die Pressstempel 32 der Druckraum der Presstöpfe 30 näherungsweise halbiert werden kann.

Um die Biegesteifigkeit der Platten 26, 28 der Presstopftragstrukturen 22.1, 22.2, 22.3, 22.4 und der Pressstempeltragstrukturen 24.1, 24.2, 24.3, 24.4 zu erhöhen, sind an der Unterseite der Platten 26, 28 Stützstege 54 ausgebildet, welche sich vorzugsweise entlang der äußeren Berandung der jeweiligen Platte 26, 28 erstrecken können. Wie am besten anhand der untersten Presstopftragstruktur 22.1 erkannt werden kann, ist die Höhe der Stützstege 54 und die Position des als oberen Anschlag dienenden Kragens 42 der Presstöpfe 30 derart aufeinander abgestimmt, dass in der unteren Verschiebungsposition der Presstöpfe 30 deren Unterkante mit der Unterkante der Stützstege 54 in einer Ebene liegt.

Darüber hinaus sind zumindest an der Oberseite der Platten 28 mehrere nach oben ragende zapfenartige Vorsprünge 56 vorgesehen, welche derart angeordnet sind, dass sie beim Aufeinanderstapeln einer Presstopftragstruktur 22.1, 22.2, 22.3, 22.4 auf eine Pressstempeltragstruktur 24.1, 24.2, 24.3, 24.4 mit den Stützstegen 54 der darüber befindlichen Platte 26 gleitend in Anlage gelangen, wodurch beim Aufeinanderstapeln der Pressstempel- und Presstopftragstrukturen 24.1, 24.2, 24.3, 24.4, 22.1, 22.2, 22.3, 22.4 sowohl eine seitliche Führung als auch eine seitliche Aussteifung zur Verfügung gestellt wird.

Wie bereits zuvor beschrieben wurde, sind die Presseinheiten 18, die Pressstempel 32 sowie die Presstöpfe 30 jeweils in einem regelmäßigen 4 x 2 Raster organisiert. Das 4 x 2 Raster der Presseinheiten 18 sowie das 4 x 2 Raster der Pressstempel 32 als auch das 4 x 2 Raster der Presstöpfe 30 sind dabei identisch, so dass mit Hilfe jeweils einer Presseinheit 18 eine Presstopf-Pressstempel-Säule aus einer Vielzahl vertikal abwechselnd über- und ineinander gestapelter Presstöpfe 30 und Pressstempel 32 mit Druck beaufschlagt werden kann, um die von den einzelnen Presstöpfen 30 aufnehmbare Käsemasse zu komprimieren und dadurch von überschüssiger Molke zu befreien. Auf diesen Pressvorgang wird im Folgenden genauer eingegangen.

Bevor mit dem Pressvorgang begonnen werden kann, sind die Presstopftragstrukturen 22.1, 22.2, 22.3, 22.4 und die Pressstempeltragstrukturen 24.1, 24.2, 24.3, 24.4 abwechselnd aufeinander zu stapeln, wie dies in der Fig. 1 dargestellt ist. Hierzu wird zunächst eine erste Presstopftragstruktur 22.1, deren Presstöpfe 30 zuvor mit Käsemasse K annähernd randvoll befüllt wurden, auf dem Presstisch 17 angeordnet, welcher zuvor auf den Trägerschienen 15 aus dem Pressrahmen 11 herausgefahren wurde. Hierzu kann die Presstopftragstruktur 22.1, deren Presstöpfe 30 zuvor in einer Füllstation mit Käsemasse K befüllt wurden, beispielsweise mit einem Greifer ergriffen und angehoben werden, wodurch alle acht Presstöpfe 30 mit ihren Krägen 42 mit der Platte 26 bzw. den Berandungen der Durchgangsöffnungen 34 fest in Anlage gelangen, um sich darauf abzustützen. In dieser Konstellation wird dann die Presstopftragstruktur 22.1 auf dem Presstisch 17 mit ihren Stützstegen 52 abgesetzt, wobei keine vertikale Verschiebung der Presstöpfe 30 stattfindet, da deren Unterkante bündig mit der Unterkante der Stützstege 54 abschließt. Die Presstöpfe 30 erstrecken sich somit jeweils etwa zur Hälfte oberhalb und unterhalb der Platte 26.

Anschließend kann dann eine erste Pressstempeltragstruktur 24.1 beispielsweise mit einem Greifer ergriffen und angehoben werden, um auf der ersten Presstopftragstruktur 22.1 abgesetzt bzw. auf dieser angeordnet zu werden. Während des Anhebens der Pressstempeltragstruktur 24.1 gleiten deren Pressstempel 32 in ihre untere Verschiebungsposition in der die oberen Druckplatten 48 der Pressstempel 32 mit der Platte 28 bzw. der Berandung der Durchgangsöffnungen, in denen die Stege 52 geführt sind, in Anlage gelangen. Mit anderen Worten hängen die Pressstempel 32, nachdem die erste Pressstempeltragstruktur 24.1 angehoben wurde, im Wesentlichen unterhalb deren Platte 28.

In dieser Konstellation wird die erste Pressstempeltragstruktur 24.1 derart oberhalb der ersten Presstopftragstruktur 22.1 positioniert, dass beim Absenken der ersten Pressstempeltragstruktur 24.1 deren Pressstempel 32 bzw. deren untere Druckplatten 50 in die Presstöpfe 30 eindringen und auf der darin befindlichen Käsemasse K aufstehen. Beim weiteren Absenken der Pressstempeltragstruktur 24.1 gleitet dann die Platte 28 der ersten Pressstempeltragstruktur 24.1 an den Stegen 52 der Pressstempel 32 entlang nach unten, bis sie auf den oberen Flanschen 44 der Presstöpfe 30 aufliegt, was bei vollständiger Befüllung der Presstöpfe 30 der oberen Verschiebungsposition der Pressstempel 32 entspricht. Anders ausgedrückt werden beim Absenken der Pressstempeltragstruktur 24.1 deren Pressstempel 32 in Richtung ihrer oberen Verschiebungsposition geschoben, so dass sie sich beispielsweise bei einer Konstellation gemäß Fig. 1 um dasselbe Maß oberhalb ihrer Tragstruktur erstrecken, wie die Presstöpfe 30 der ersten Presstopftragstruktur 22.1.

Anschließend wird eine zweite Presstopftragstruktur 22.2, deren Presstöpfe 30 zuvor mit Käsemasse K in einer Füllstation befüllt wurden, beispielsweise mit einem Greifer ergriffen und angehoben, so dass deren Presstöpfe 30 mit ihren Krägen 42 auf der Platte 26 bzw. den Berandung der Durchgangsöffnung 34 derselben aufliegen, wie dies bereits zuvor unter Bezugnahme auf die erste Presstopftragstruktur 22.1 beschrieben wurde. Die zweite Presstopftragstruktur 22.2 wird anschließend derart oberhalb der ersten Pressstempeltragstruktur 24.1 positioniert, dass beim Absenken der zweiten Presstopftragstruktur 22.2 alle ihrer acht Presstöpfe 30 mit ihrem Boden 38 auf einem Pressstempel 32 bzw. einer oberen Druckplatte 48 der darunter befindlichen Pressstempeltragstruktur 24.1 aufstehen. Beim weiteren Absenken der Platte 26 der zweiten Presstopftragstruktur 22.2 gleitet dann die Platte 26 an den Umfangswandungen 40 der Presstöpfe 30 entlang nach unten. Hierbei gelangen die Stützstege 54 der zweiten Presstopftragstruktur 22.2 gleitend in Anlage mit den auf der Oberseite der darunter befindlichen Pressstempeltragstruktur 24.1 vorgesehenen Vorsprüngen 56, so dass beim weiteren Absenken die gesamte zweite Presstopftragstruktur 22.2 so ausgerichtet wird, dass deren Presstöpfe 30 zentrisch auf den darunter befindlichen Pressstempeln 32 aufstehen.

Nachdem auf diese Weise auf die erste Pressstempeltragstruktur 24.1 die zweite Presstopftragstruktur 22.2 gestapelt wurde, wird anschließend auf die zweite Presstopftragstruktur 22.2 eine zweite Pressstempeltragstruktur 24.2 in gleicher Weise gestapelt, wie dies zuvor unter Bezugnahme auf die erste Pressstempeltragstruktur 24.1 beschrieben wurde. Auf diese zweite Pressstempeltragstruktur 24.2 wird anschließend eine dritte Presstopftragstruktur 22.3 gestapelt, wie dies zuvor unter Bezugnahme auf die zweite Presstopftragstruktur 22.2 beschrieben wurde. In entsprechender Weise werden anschließend eine dritte Pressstempeltragstruktur 24.3, eine vierte Presstopftragstruktur 22.4 und eine vierte Pressstempeltragstruktur 24.4 auf den bereits gebildeten Stapel aufgestapelt.

Anstelle die Presstopftragstrukturen 22.1, 22.2, 22.3, 22.4 und die Pressstempeltragstrukturen 24.1, 24.2, 24.3, 24.4 in der voran beschriebenen Art und Weise einzeln nacheinander auf dem Presstisch 17 übereinander zu stapeln, ist es auch möglich, direkt nach der Befüllung der einzelnen Presstöpfe 30 der Presstopftragstrukturen 22.1, 22.2, 22.3, 22.4 mit Käsemasse, auf jede der Presstopftragstrukturen 22.1, 22.2, 22.3, 22.4 eine Pressstempeltragstruktur 24.1, 24.2, 24.3, 24.4 zu stapeln, so dass die Presstopftragstrukturen 22.1, 22.2, 22.3, 22.4 und die Pressstempeltragstrukturen 24.1, 24.2, 24.3, 24.4 paarweise auf dem Presstisch 17 übereinander gestapelt werden können. Auch hierdurch kann eine weitere Rationalisierung der Bewegungsabläufe bei der Käseherstellung sichergestellt werden.

Der gebildete Stapel aus abwechselnd aufeinander gestapelten Presstopf tragstrukturen 22.1, 22.2, 22.3, 22.4 und Pressstempeltragstrukturen 24.1, 24.2, 24.3, 24.4 wird anschließend auf den Trägerschienen 15 in den Pressrahmen 11 gefahren, so dass die Pressstempel 32 der obersten Pressstempeltragstruktur 24.4 genau unterhalb der Presseinheiten 18 angeordnet sind. Anschließend werden die Kolbenstangen 19 der Presseinheiten 18 ausgefahren, so dass deren Druckteller 20 Druck auf die obersten Pressstempel 32 ausüben. Dieser Druck pflanzt sich in den acht Presstopf-Pressstempel-Säulen nach unten fort und wird über die Trägerschienen 15 und die Stützfüße 14 zurück in den Pressrahmen 11 abgeleitet. Innerhalb der einzelnen Presstopf-Pressstempel-Säulen pflanzt sich der über die obersten Pressstempel 32 aufgebrachte Druck über die in dem obersten Presstopf 30 befindliche Käsemasse und von dort über den Topfboden 38 auf den nächstfolgenden Pressstempel 32 und von dort wiederum auf die Käsemasse des nächstfolgenden Presstopfs 30 und in entsprechender Weise nach unten fort, so dass die Käsemasse K in jedem Presstopf 30 einer Presstopf-Pressstempel-Säule in der gewünschten Weise mit demselben Druck beaufschlagt wird.

Wenn die Kolbenstangen 19 der Presseinheiten 18 im Laufe des Pressvorgangs weiter ausgefahren werden, so führt dies dazu, dass die Pressstempel 32 der einzelnen Pressstempeltragstrukturen 24.1, 24.2, 24.3, 24.4 weiter in die jeweils darunter befindlichen Presstöpfe 30 eindringen, wodurch in der gewünschten Weise überschüssige Molke aus in den Umfangswandungen 40 der Presstöpfe 30 ausgebildeten Öffnungen ausgepresst wird. Zusammen mit den Pressstempeln 32 der Pressstempeltragstrukturen 24.1, 24.2, 24.3 setzen sich dabei gleichzeitig die darüber befindlichen Presstopftragstrukturen 22.2, 22.3, 22.4 bzw. deren Platten 26, welche auf den unteren Flanschen 46 der Topfböden 38 ruhen, ab, bis sie mit ihren Stützstegen 54 auf den jeweils darunter befindlichen Pressstempeltragstrukturen 24.1, 24.2, 24.3 aufstehen. Da die Presstöpfe 30 direkt auf den darunter befindlichen Pressstempeln 32 aufstehen, senken sich gleichermaßen mit der Absenkung der Pressstempel 32 die auf den oberen Flanschen 44 aufliegenden Platten 28 der Pressstempeltragstrukturen 24.2, 24.3, 24.4 ab.

Dieser Pressvorgang, welcher durch das Ausfahren der Kolbenstangen 19 der Presseinheiten 18 initiiert wird, kann solange fortgesetzt werden, bis die oberen Druckplatten 48 der Pressstempel 32 sich in Anlage mit den Platten 28 der Pressstempeltragstrukturen 24.1, 24.2, 24.3, 24.4 befindt, wie dies in der Fig. 2 dargestellt ist, in der eine weitere Kraftbeaufschlagung über die Presseinheiten 18 sich direkt über die Platten 28 der Pressstempeltragstrukturen in die darunter befindlichen Umfangswandungen 40 der Presstöpfe 30 und von dort über den Presstisch 17 in die Trägerschienen 15 fortpflanzt, so dass keine weitere Komprimierung der von den Presstöpfen 30 aufgenommenen Käsemasse K mehr erfolgen kann.

Alternativ kann der Pressvorgang dann beendet werden, wenn eine vorgegebene Presszeit verstrichen ist. In diesem Fall gelangen die oberen Druckplatten 48 der Pressstempel 32 nicht notwendigerweise in Anlage mit den Platten 28 der Pressstempeltragstrukturen 24.1, 24.2, 24.3, 24.4.

Wie der voranstehenden Beschreibung entnommen werden kann, sind die Platten 26, 28 der Presstopf- und Pressstempeltragstrukturen 22.1, 22.2, 22.3, 22.4, 24.1, 24.2, 24.3, 24.4 während des gesamten Pressvorgangs in vertikaler Richtung verschiebbar, so dass sich die Pressstempel 32 und Presstöpfe 30 unabhängig von diesen Tragstrukturen bzw. deren Platten 26, 28 bewegen können. Die Presstopftragstrukturen 22.1, 22.2, 22.3, 22.4 und die Pressstempeltragstrukturen 24.1, 24.2, 24.3, 24.4 dienen vielmehr zum einen als Handhabungshilfe, damit die einzelnen Presstöpfe 30 und Pressstempel 32 nicht einzeln in den Pressrahmen 11 transportiert werden müssen, und zum anderen als Führung und Aussteifung für die einzelnen Presstopf-Pressstempel-Säulen, damit diese während des Pressvorgangs nicht seitlich ausknicken können.

### Bezugszeichenliste

- 10: Pressenanordnung
- 11: Pressrahmen
- 12: obere Riegelstruktur von 11
- 13: untere Riegelstruktur von 11
- 14: Stützfüße
- 15: Trägerschienen
- 16: Rollen
- 17: fahrbarer Presstisch
- 18: Presseinheiten
- 19: Kolbenstangen
- 20: Druckteller von 18
- 21: Stützen von 11
- 22.1: erste Presstopftragstruktur
- 22.2: zweite Presstopftragstruktur
- 22.3: dritte Presstopftragstruktur
- 22.4: vierte Presstopftragstruktur
- 24.1: erste Pressstempeltragstruktur
- 24.2: zweite Pressstempeltragstruktur
- 24.3: dritte Pressstempeltragstruktur
- 24.4: vierte Pressstempeltragstruktur
- 26: Platten von 22.1, 22.2, 22.3, 22.4
- 28: Platten von 24.1, 24.2, 24.3, 24.4
- 30: Presstöpfe
- 32: Pressstempel
- 34: Durchgangsöffnungen von 26
- 36: Durchgangsöffnungen von 28
- 38: Topfböden von 30
- 40: Umfangswände von 30
- 42: Krägen
- 44: oberer Flansch von 30
- 46: unterer Flansch von 30
- 48: obere Druckplatte von 32
- 50: untere Druckplatte von 32
- 52: Stege
- 54: Stützstege
- 56: Vorsprünge
- K: Käsemasse

## Patentansprüche

1. Pressenanordnung zum Pressen von Käse in Blockformen, umfassend:
- zumindest eine ebene Tragstruktur (22.1, 22.2, 22.3, 22.4), in der eine Vielzahl von Presstöpfen (30) entlang ihrer Längsachse zwischen einer oberen Verschiebungsposition und einer unteren Verschiebungsposition verschiebbar gelagert sind; und
- zumindest eine weitere ebene Tragstruktur (24.1, 24.2, 24.3, 24.4), in der eine Vielzahl von in die Presstöpfe (30) einführbare Pressstempel (32) entlang ihrer Längsachse zwischen einer oberen Verschiebungsposition und einer unteren Verschiebungsposition verschiebbar gelagert sind.

2. Pressenanordnung nach Anspruch 1,
**dadurch gekennzeichnet, dass** die Presstöpfe (30) und die Pressstempel (32) in demselben Raster verteilt über die jeweilige Tragstruktur (22.1, 22.2, 22.3, 22.4, 24.1, 24.2, 24.3, 24.4) angeordnet sind, sodass in einer ersten Konfiguration, in der die Pressstempeltragstruktur (24.1, 24.2, 24.3, 24.4) über der Presstopftragstruktur (22.1, 22.2, 22.3, 22.4) angeordnet ist, ein von den Presstöpfen (30) definierter Druckraum durch die in die Presstöpfe (30) einführbaren Pressstempel (32) verringerbar ist, und in einer zweiten Konfiguration, in der die Presstopftragstruktur (22.1, 22.2, 22.3, 22.4) über der Pressstempeltragstruktur (24.1, 24.2, 24.3, 24.4) angeordnet ist, die Pressstempel (32) von den darüber befindlichen Presstöpfen (30) mit Druck beaufschlagbar sind.

3. Pressenanordnung nach Anspruch 1 oder 2,
**dadurch gekennzeichnet, dass** die Presstopftragstruktur (22.1, 22.2, 22.3, 22.4) eine Vielzahl von Durchgangsöffnungen (34) aufweist, in denen die einzelnen Presstöpfe (30) angeordnet sind, wobei jeder Presstopf (30) zwei in Längsrichtung beabstandete Anschläge (42, 46) aufweist, welche derart angeordnet sind, dass in Zusammenwirken mit der zugehörigen Durchgangsöffnung (34) die Verschiebbarkeit des Presstopfs (30) begrenzt ist.

4. Pressenanordnung nach zumindest einem der vorstehenden Ansprüche,
**dadurch gekennzeichnet, dass** ein unterer Anschlag des Presstopfs (30) durch einen den Presstopf (30) umfangseitig umgebenden unteren Flansch (46) gebildet wird, wobei insbesondere ein oberer Anschlag des Presstopfs (30) durch einen den Presstopf (30) umfangseitig umgebenden Kragen (42) gebildet wird.

5. Pressenanordnung nach Anspruch 4,
**dadurch gekennzeichnet, dass** der untere Flansch (46) am Boden (38) des Presstopfs (30) und der Kragen (42) oberhalb des unteren Flanschs (46) entlang der Umfangswand (40) des Presstopfs (30) vorgesehen ist.

6. Pressenanordnung nach zumindest einem der Ansprüche 4 oder 5,
**dadurch gekennzeichnet, dass** jeder der Presstöpfe (30) entlang seiner Einfüllöffnung einen oberen Flansch (44) aufweist.

7. Pressenanordnung nach zumindest einem der vorstehenden Ansprüche, **dadurch gekennzeichnet, dass** die Pressstempeltragstruktur (24.1, 24.2, 24.3, 24.4) eine Vielzahl von Durchgangsöffnungen (36) aufweist, in denen die einzelnen Pressstempel (32) verschiebbar geführt sind, wobei jeder Pressstempel (32) zwei in Längsrichtung beabstandete Anschläge (48, 50) aufweist, welche derart angeordnet sind, dass in Zusammenwirken mit der zugehörigen Durchgangsöffnung (36) die Verschiebbarkeit des Pressstempels (32) begrenzt ist.

8. Pressenanordnung nach Anspruch 7,
**dadurch gekennzeichnet, dass** jeder Pressstempel (32) zwei in Längsrichtung durch zumindest ein Abstandselement (52) beabstandete Druckplatten (48, 50) aufweist, wobei der obere Anschlag des Pressstempels (32) durch die obere Druckplatte (48) und der untere Anschlag des Pressstempels (32) durch die untere Druckplatte (50) gebildet wird, wobei insbesondere das zumindest eine Abstandselement (52) jedes Pressstempels (32) durch zumindest zwei parallel zueinander verlaufende Stege (52) gebildet wird.

9. Pressenanordnung nach Anspruch 8,
**dadurch gekennzeichnet, dass** die einem jedem Pressstempel (32) zugeordnete Durchgangsöffnung (36) eine kleinere Querschnittsfläche als jede der Druckplatten (48, 50) aufweist.

10. Pressenanordnung nach zumindest einem der vorstehenden Ansprüche,
**dadurch gekennzeichnet, dass** die Presstopftragstruktur (22.1, 22.2, 22.3, 22.4) und die Pressstempeltragstruktur (24.1, 24.2, 24.3, 24.4) durch einen Trägerrost oder eine Platte (26, 28) gebildet werden, an deren Unterseite Stützstege (54) ausgebildet sind, welche sich vorzugsweise entlang der äußeren Berandung des Trägerrosts bzw. der Platte (26, 28) erstrecken.

11. Pressenanordnung nach Anspruch 10,
**dadurch gekennzeichnet, dass** die Höhe der Stützstege (54) und die Position des oberen Anschlags (42) der Presstöpfe (30) derart aufeinander abgestimmt sind, dass in der untersten Verschiebungsposition der Presstöpfe (30) deren Unterkante mit der Unterkante der Stützstege (54) bündig abschließt.

12. Pressenanordnung nach Anspruch 9 oder 10,
**dadurch gekennzeichnet, dass** zumindest an der Oberseite des Trägerrosts bzw. der Platte (28) der Pressstempeltragstruktur (24.1, 24.2, 24.3, 24.4) mehrere Vorsprünge (56) vorgesehen sind, die derart angeordnet sind, dass sie beim Aufeinanderstapeln einer Presstopftragstruktur (22.1, 22.2, 22.3, 22.4) auf eine Pressstempeltragstruktur (24.1, 24.2, 24.3, 24.4), mit den Stützstegen (54) des/der darüber befindlichen Trägerrosts/Platte (26) gleitend in Anlage gelangen.

13. Pressenanordnung nach zumindest einem der vorstehenden Ansprüche,
**dadurch gekennzeichnet, dass** ferner ein Pressrahmen (11) zur Aufnahme einer Vielzahl abwechselnd aufeinander gestapelter Pressstempel- und Presstopftragstrukturen (22.1, 22.2, 22.3, 22.4, 24.1, 24.2, 24.3, 24.4) vorgesehen ist, welcher eine obere Riegelstruktur (12) und eine mit der oberen Riegelstruktur (12) starr verbundene untere Riegelstruktur (13) aufweist, wobei die obere Riegelstruktur (12) eine Vielzahl von Presseinheiten (18) trägt, welche in demselben Raster wie sowohl die Presstöpfe (30) als auch die Pressstempel (32) angeordnet sind, so dass die Pressstempel (32) und Presstöpfe (30) eines von der unteren Riegelstruktur (13) getragenen Stapels aus Pressstempel- und Presstopftragstrukturen (22.1, 22.2, 22.3, 22.4, 24.1, 24.2, 24.3, 24.4) über die Presseinheiten (18) mit Druck beaufschlagbar sind.

14. Verfahren zum Pressen von Käse in Blockformen unter Verwendung einer Pressenanordnung (10) nach einem der vorstehenden Ansprüche, bei dem auf eine erste Presstopftragstruktur (22.1), deren Presstöpfe (30) mit Käsemasse (K) gefüllt wurden, eine erste Pressstempeltragstruktur (24.1) derart aufgebracht wird, dass deren Pressstempel (32) in die darunter befindlichen Presstöpfe (30) eindringen, bis sie auf der darin befindlichen Käsemasse (K) aufstehen und folglich in Bezug auf die erste Pressstempeltragstruktur (24.1) in Richtung ihrer oberen Verschiebungsposition geschoben werden, bevor vorzugsweise unter Verwendung der Presseinheiten (18) des Pressrahmens (11) die Presstempel (32) in Richtung ihrer unteren Verschiebungsposition gedrückt werden.

15. Verfahren nach Anspruch 14,
**dadurch gekennzeichnet, dass** vor der Druckbeaufschlagung der ersten Pressstempeltragstruktur (24.1) zumindest eine zweite Presstopftragstruktur (22.2), deren Presstöpfe (30) mit Käsemasse (K) gefüllt wurden, und darauf zumindest eine zweite Pressstempeltragstruktur (24.2) derart aufgebracht werden, dass die Presstöpfe (30) der zweiten Presstopftragstruktur (22.2) auf den Pressstempeln (32) der ersten Pressstempeltragstruktur (24.1) aufstehen und die Pressstempel (32) der zweiten Pressstempeltragstruktur (24.2) in die Presstöpfe (30) der zweiten Presstopftragstruktur (22.2) eindringen, bis sie auf der darin befindlichen Käsemasse (K) aufstehen, wodurch sowohl die Presstöpfe (30) der zweiten Presstopftragstruktur (22.2) als auch die Pressstempel (32) der zweiten Pressstempeltragstruktur (24.2) in Richtung ihrer oberen Verschiebungsposition gedrückt werden, bevor vorzugsweise unter Verwendung der Presseinheiten (18) des Pressrahmens (11) die Presstempel (32) der zweiten Pressstempeltragstruktur (24.2) und über diese die Presstöpfe (30) der zweiten Presstopftragstruktur (22.2) sowie die Pressstempel (32) der ersten Pressstempeltragstruktur (24.1) in Richtung ihrer unteren Verschiebungsposition gedrückt werden.
